# EUROPEAN PATENT APPLICATION

(11) **EP 4 095 169 A1**
(43) Date of publication of application: **30.11.2022**
(21) Application number: 21176044.2
(22) Date of filing: 26.05.2021
(51) Int. Cl.: C08F 210/12, C08F 4/52, C08F 236/08

(54) **SUBSTITUTED ALUMINUM CHLORIDES IN THE PRODUCTION OF UNSATURATED ISOOLEFIN COPOLYMERS**

(71) Applicant: ARLANXEO Canada Inc., Sarnia, ON N7T 7M2 (CA); Caputo, Christopher, Toronto ON M6N 1V4 (CA)
(72) Inventor: CAPUTO, Christopher B., Toronto , Ontario, M6N 1V4 (CA)
(74) Representative: Kurz, Arnd

(57) **Abstract**

A process for producing an unsaturated isoolefin copolymer, the process comprising contacting an initiator system comprising a catalyst selected from the group consisting of CI2 AI(C6 F5 ), CIAI(C6F5)2 , AI(C6 F5 )3 and any mixture thereof with a reaction mixture of at least one isoolefin monomer and at least one copolymerizable unsaturated monomer in an organic diluent to produce the unsaturated isoolefin copolymer.

## Description

### Field

This application relates to the production of unsaturated isoolefin copolymers, for example butyl rubbers.

### Background

One of the limitations of butyl rubber production is the need for very cold temperatures, which are required to achieve high molecular weight polymer and high yields. Polymerizations on the production scale are performed at -98°C to -93°C and model batch polymerizations performed in the lab are performed at -93°C to -91°C. Performing polymerizations at warmer temperatures normally reduces molecular weight and increases the amount of reactor fouling.

There remains a need for a process for producing an unsaturated isoolefin copolymer having one or more of higher molecular weight, lower residual oligomer content and reduced branched microstructure. There also remains a need for a process that can be performed at higher temperature than current commercial polymerization processes while producing an unsaturated isoolefin copolymer having molecular weight, residual oligomer content and/or branched microstructure at least as good as the molecular weight, residual oligomer content and/or branched microstructure of currently commercially produced unsaturated isoolefin copolymer.

### Summary

A process for producing an unsaturated isoolefin copolymer, the process comprising contacting an initiator system comprising a catalyst of Formula (I):

AlR₁R₂R₃ (I),

with a reaction mixture of at least one isoolefin monomer and at least one copolymerizable unsaturated monomer in an organic diluent to produce the unsaturated isoolefin copolymer, where R₁, R₂ and R₃ are the same or different and are each halogen or a hydrocarbon moiety, with the proviso that at least one of R₁, R₂ and R₃ is a fluorinated hydrocarbon moiety.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1A is a graph of number average molecular weight (Mₙ) of butyl rubber polymer prepared using four different catalysts (AlCl₃, Cl₂Al(C₆F₅), ClAl(C₆F₅)₂ and Al(C₆F₅)₃) at four different temperatures (-90°C, -80°C, -70°C or -60°C).
Fig. 1B is a graph of weight average molecular weight (M_{w}) of butyl rubber polymer prepared using four different catalysts (AlCl₃, Cl₂Al(C₆F₅) ClAl(C₆F₅)₂ and Al(C₆F₅)₃) at four different temperatures (-90°C, -80°C, -70°C or -60°C).
Fig. 1C is a graph comparing number average molecular weight (Mₙ) to weight average molecular weight (M_{w}) of butyl rubber polymer prepared using four different catalysts (AlCl₃, Cl₂Al(C₆F₅), ClAl(C₆F₅)₂ and Al(C₆F₅)₃) at -90°C.
Fig. 2A is a graph of C13 cyclic oligomer content (ppm) in butyl rubber polymer prepared using four different catalysts (AlCl₃, Cl₂Al(C₆F₅), ClAl(C₆F₅)₂ and Al(C₆F₅)₃) at four different temperatures (-90°C, -80°C, -70°C or -60°C).
Fig. 2B is a graph of C21 cyclic oligomer content (ppm) in butyl rubber polymer prepared using four different catalysts (AlCl₃, Cl₂Al(C₆F₅), ClAl(C₆F₅)₂ and Al(C₆F₅)₃) at four different temperatures (-90°C, -80°C, -70°C or -60°C).
Fig. 2C is a graph of total cyclic oligomer content (C13+C21) in butyl rubber polymer prepared using four different catalysts (AlCl₃, Cl₂Al(C₆F₅), ClAl(C₆F₅)₂ and Al(C₆F₅)₃) at - 90°C.
Fig. 3 is a graph of branched unsaturated content (mol%) in butyl rubber polymer prepared using four different catalysts (AlCl₃, Cl₂Al(C₆F₅), ClAl(C₆F₅)₂, and Al(C₆F₅)₃) at four different temperatures (-90°C, -80°C, -70°C or -60°C).

### Detailed Description

Production of the unsaturated isoolefin copolymer involves polymerizing at least one isoolefin monomer and at least one copolymerizable unsaturated monomer in an organic diluent in the presence of the initiator system, which is capable of initiating the polymerization process. Polymerization occurs in a polymerization reactor. Suitable polymerization reactors include, for example, flow-through polymerization reactors, plug flow reactor, moving belt or drum reactors, and the like. The process may be a continuous or batch process. In a preferred embodiment, the process is a continuous polymerization process. The process may comprise slurry or solution polymerization of the monomers. In a preferred embodiment, the process is a slurry polymerization process.

The unsaturated isoolefin copolymer comprises repeating units derived from at least one isoolefin monomer and repeating units derived from at least one copolymerizable unsaturated monomer, and optionally repeating units derived from one or more further copolymerizable monomers.

Suitable isoolefin monomers include hydrocarbon monomers having 4 to 16 carbon atoms. In one embodiment, the isoolefin monomers have from 4 to 7 carbon atoms. Examples of suitable isoolefins include isobutene (isobutylene), 2-methyl-1-butene, 3-methyl-1-butene, 2-methyl-2-butene, 4-methyl-1-pentene, 4-methyl-1-pentene and mixtures thereof. A preferred isoolefin monomer is isobutene (isobutylene).

Suitable copolymerizable unsaturated monomers include multiolefins, p-methyl styrene, β-pinene or mixtures thereof. Multiolefin monomers include hydrocarbon monomers having 4 to 14 carbon atoms. In some embodiments, the multiolefin monomers are conjugated dienes. Examples of suitable conjugated diene monomers include isoprene, butadiene, 2-methylbutadiene, 2,4-dimethylbutadiene, piperylene, 3-methyl-1,3-pentadiene, 2,4-hexadiene, 2-neopentylbutadiene, 2-methyl-1,5-hexadiene, 2,5-dimethyl-2,4-hexadiene, 2-methyl-1,4-pentadiene, 4-butyl-1,3-pentadiene, 2,3-dimethyl-1,3-pentadiene, 2,3-dibutyl-1,3-pentadiene, 2-ethyl-1,3-pentadiene, 2-ethyl-1,3-butadiene, 2-methyl-1,6-heptadiene, cyclopentadiene, methylcyclopentadiene, cyclohexadiene, 1-vinyl-cyclohexadiene and mixtures thereof. A preferred copolymerizable unsaturated monomer is isoprene.

The unsaturated isoolefin copolymer may optionally include one or more additional copolymerizable monomers. Suitable additional copolymerizable monomers include, for example, styrenic monomers, such as alkyl-substituted vinyl aromatic co-monomers, including but not limited to a C₁-C₄ alkyl substituted styrene. Specific examples of additional copolymerizable monomers include, for example, α-methyl styrene, p-methyl styrene, chlorostyrene, cyclopentadiene and methylcyclopentadiene. Indene and other styrene derivatives may also be used. In one embodiment, the halogenatable isoolefin copolymer may comprise random copolymers of isobutene, isoprene and p-methyl styrene.

The unsaturated isoolefin copolymer is formed by copolymerization of a monomer mixture. Preferably, the monomer mixture comprises about 80-99.9 mol% of at least one isoolefin monomer and about 0.1-20 mol% of at least one copolymerizable unsaturated monomer, based on the monomers in the monomer mixture. More preferably, the monomer mixture comprises about 90-99.9 mol% of at least one isoolefin monomer and about 0.1-10 mol% of at least one copolymerizable unsaturated monomer. In one embodiment, the monomer mixture comprises about 92.5-97.5 mol% of at least one isoolefin monomer and about 2.5-7.5 mol% of at least one copolymerizable unsaturated monomer. In another embodiment, the monomer mixture comprises about 97.4-95 mol% of at least one isoolefin monomer and about 2-5 mol% of at least one copolymerizable unsaturated monomer.

If the monomer mixture comprises the additional copolymerizable with the isoolefins and/or copolymerizable unsaturated monomers, the additional copolymerizable monomer preferably replaces a portion of the copolymerizable unsaturated monomer. When a multiolefin monomer is used, the monomer mixture may also comprise from 0.01% to 1% by weight of at least one multiolefin cross-linking agent, and when the multiolefin cross-linking agent is present, the amount of multiolefin monomer is reduced correspondingly.

Suitable organic diluents may include, for example, alkanes, chloroalkanes, cycloalkanes, aromatics, hydrofluorocarbons (HFC) or any mixture thereof. Chloroalkanes may include, for example methyl chloride, dichloromethane or any mixture thereof. Methyl chloride is particularly preferred. Alkanes and cycloalkanes may include, for example, isopentane, cyclopentane, 2,2-dimethylbutane, 2,3-dimethylbutane, 2-methylpentane, 3-methylpentane, n-hexane, methylcyclopentane, 2,2-dimethylpentane or any mixture thereof. Alkanes and cycloalkanes are preferably C6 solvents, which include n-hexane or hexane isomers, such as 2-methyl pentane or 3-methyl pentane, or mixtures of n-hexane and such isomers as well as cyclohexane.

The monomers are generally polymerized cationically in the diluent at temperatures in a range of from -120°C to +20°C. In some embodiments, the temperature may be in a range of -100°C to -50°C, or -95°C to -60°C, or -95°C to -70°C, or -90°C to -70°C, or -85°C to -60°C, or -85°C to -70°C.

The initiator system comprises the catalyst, and preferably a proton source. A mixture of different catalysts may be used. The catalyst is a compound having Formula (I):

AlR₁R₂R₃ (I),

where R₁, R₂ and R₃ are the same or different and are each a halogen or a hydrocarbon moiety, with the proviso that at least one of R₁, R₂ and R₃ is a fluorinated hydrocarbon moiety that contains at least one fluorine atom.

The halogen may be F, Cl, Br or I, preferably Cl or Br, more preferably Cl.

The hydrocarbon moiety may be aliphatic or aromatic. The hydrocarbon moiety be substituted or unsubstituted with one or more substituents. An aliphatic hydrocarbon moiety may be a straight chain, branched chain or cyclic alkyl, alkenyl or alkynyl group. Alkyl groups are preferably a C₁₋₈ alkyl groups, more preferably C₁₋₄ alkyl groups, for example methyl, ethyl, *n*-propyl, *i*-propyl, cyclopropyl, *n*-butyl, *i*-butyl, *t*-butyl and methyl cyclopropyl. Alkenyl groups are preferably C₂₋₈ alkenyl group. Alkynyl groups are preferably C₂₋₈ alkynyl groups. An aromatic hydrocarbon moiety may be single or multiple rings. The aromatic hydrocarbon moiety is preferably a C₆-C₁₈ aromatic hydrocarbon moiety. Some examples of aromatic hydrocarbon moieties include phenyl, naphthyl, anthracyl and biphenyl. Substituents on the hydrocarbon moieties may include, for example, one or more of hydroxy, alkoxy, aryloxy, nitro, primary amino, secondary amino, tertiary amino, halo (e.g., F, Br, Cl, I), acyl, carboxy, amido, estero, an alkyl group when the hydrocarbon moiety is aromatic, an aryl group when the hydrocarbon moiety is aliphatic and the like.

At least one of R₁, R₂ and R₃ is a fluorinated hydrocarbon moiety that contains at least one fluorine atom. Preferably, the fluorinated hydrocarbon moiety contains a plurality of fluorine atoms, for example, 2, 3, 4 or 5 fluorine atoms. The fluorinated hydrocarbon moiety may be, for example, a fluorinated alkyl group, in particular a fluorinated C₁₋₈ alkyl group, or a fluorinated aryl group, in particular a fluorinated phenyl group. Fluorinated phenyl groups are particularly preferred, for example, 2-fluorophenyl, 3-fluorophenyl, 4-fluorophenyl, 2,3-difluorophenyl, 2,4-difluorophenyl, 2,5-difluorophenyl, 2,6-difluorophenyl, 3,4-difluorophenyl, 3,5-difluorophenyl, 2,3,4-trifluorophenyl, 2,3,5-trifluorophenyl, 2,3,6-trifluorophenyl, 2,4,5-trifluorophenyl, 3,4,5-trifluorophenyl, 2,4,6-trifluorophenyl, 2,3,4,5-tetrafluorophenyl, 2,3,4,6-tetrafluorophenyl, 2,3,5,6-tetrafluorophenyl and pentafluorophenyl. Pentafluorophenyl is particularly preferred.

In some embodiments, R₁, R₂ and R₃ are the same or different and are fluorinated hydrocarbon moieties. In some embodiments, R₁, R₂ and R₃ are the same and are fluorinated hydrocarbon moieties. In some embodiments, one of R₁, R₂ and R₃ is a halogen, preferably Cl, and two are the same or different and are fluorinated hydrocarbon moieties. In some embodiments, one of R₁, R₂ and R₃ is a halogen, preferably Cl, and two are the same and are fluorinated hydrocarbon moieties, preferably pentafluorophenyl. In some embodiments, two of R₁, R₂ and R₃ are halogens, preferably Cl, and one is a fluorinated hydrocarbon moiety, preferably pentafluorophenyl.

The catalyst is most preferably ClAl(C₆F₅)₂, Cl₂Al(C₆F₅), Al(C₆F₅)₃ or any mixture thereof.

The proton source includes any compound that will produce a proton when added to the catalyst or a composition containing the catalyst. Protons are generated from the reaction of the catalyst with proton sources to produce the proton and a corresponding byproduct. Proton sources include, for example, water (H₂O), alcohols, phenols, thiols, carboxylic acids, and the like or any mixture thereof. Water, alcohol, phenol or any mixture thereof is preferred. The most preferred proton source is water. A preferred ratio of catalyst to proton source is from 5:1 to 150:1, or from 5:1 to 100:1 by weight, or from 5:1 to 50:1 by weight. The initiator system is preferably present in the reaction mixture in an amount providing 0.0007-0.05 wt% of the catalyst, more preferably 0.0007-0.02 wt% of the catalyst or 0.001-0.008 wt% of the catalyst, based on total weight of the reaction mixture.

The initiator system is dissolved in an organic solvent to produce an initiator solution, which is then contacted with the reaction mixture to initiate polymerization of the monomers. The organic solvent may comprise any of the organic diluents described above. Preferably, the organic solvent comprises a polar organic solvent. Methyl chloride is particularly preferred. The catalyst is preferably present in the initiator solution at a concentration of 0.0007 wt% to 1 wt%, based on total weight of the initiator solution, more preferably 0.01 wt% to 0.9 wt%, 0.05 wt% to 0.6 wt%, 0.075 wt% to 0.5 wt% or 0.1 wt% to 0.4 wt%. The initiator system is preferably soluble in the reaction mixture.

After the polymerization is complete, the unsaturated isoolefin copolymer may be recovered from the reaction mixture by known methods. For example, the organic diluent, organic solvent and residual monomers may be separated from the unsaturated isoolefin copolymer by flash separation using a heated organic solvent or steam. The unsaturated isoolefin copolymer may then be dried and processed into cements, crumbs, bales or the like for further use, storage or shipping.

Use of an initiator system comprising a catalyst of Formula (I) in the copolymerization of an isoolefin and a copolymerizable unsaturated monomer generates an unsaturated isoolefin copolymer with higher molecular weight, lower residual oligomer content and reduced branched microstructure (reduced branched isoprenoid content) when compared to an unsaturated isoolefin copolymer having the same repeating monomer units but prepared at the same temperature using an initiator system comprising AlCl₃. Thus, by using an initiator system comprising the catalyst of Formula (I), it is possible to perform the polymerization reaction at higher temperatures (at least as high as about -70°C) while obtaining an unsaturated isoolefin copolymer with comparable or better properties to unsaturated isoolefin copolymers produced using AlCl₃ at lower temperatures (less than about -90°C).

The ability to generate target molecular weight unsaturated isoolefin copolymer materials at higher temperatures (e.g., as high as about -70°C) with equivalent or lower amounts of branched isoprene microstructure and residual C13 and C21 oligomers to current commercially produced unsaturated isoolefin copolymers is possible using the initiator system described herein. At equivalent temperatures, the unsaturated isoolefin copolymers have significantly higher molecular weights, lower branched isoprenoid microstructure and/or oligomer production than unsaturated isoolefin copolymer using AlCl₃ in the initiator system.

The Mₙ of unsaturated isoolefin copolymers produced using the fluorinated catalysts is preferably 15% or more, more preferably 50% or more, greater than unsaturated isoolefin copolymers produced using AlCl₃ catalyst at the same temperature at -70°C or lower. M_{w} of unsaturated isoolefin copolymers produced using the fluorinated catalysts is preferably 10% or more, more preferably 50% or more, greater than unsaturated isoolefin copolymers produced using AlCl₃ catalyst at the same temperature at -70°C or lower. Total cyclic oligomer content produced using the fluorinated catalysts is preferably 15% or more, more preferably 45% or more, yet more preferably 60% or more, less than unsaturated isoolefin copolymers produced using AlCl₃ catalyst at the same temperature at -70°C or lower.

### EXAMPLES:

### Example 1 - Production of Butyl Rubber with Aluminum Catalysts

All manipulations were performed in an MBraun^{™} glovebox filled with nitrogen and equipped with liquid nitrogen-cooled pentane baths.

An initiator solution of AlCl₃ was prepared by dissolving 0.3 g in 100 mL of methyl chloride at -30°C and stirring for 30 mins, after which point the bath was cooled to -95°C.

For all other initiator solutions, the pentane bath was initially cooled to -95°C. A specific volume of methyl chloride (40-120 mL) was dispensed and collected in a 600 mL stainless steel beaker. The catalyst (Cl₂Al(C₆F₅), ClAl(C₆F₅)₂ or Al(C₆F₅)₃), contained in a 20 mL vial, was placed horizontally in the beaker. The vial was then opened using tweezers, allowing the methyl chloride to contact and dissolve the initiator without exposing it to the glovebox atmosphere. The initiator solution was transferred to a 125 mL Erlenmeyer flask. Methyl chloride contains sufficient water as an impurity to act as the proton source in the initiator solutions.

The initiator solutions were then used in butyl polymerizations by adding the initiator solutions to mixtures of isobutylene (20 mL) and isoprene (0.7 ml) in methyl chloride (180 mL) at a desired temperature (-90°C, -80°C, -70°C or -60°C). The initiator solutions were added in a volume that contained 6.75 x 10⁻⁵ mol of AlCl₃, or 6.75 x 10⁻⁵ mol of Cl₂Al(C₆F₅), or 6.75 x 10⁻⁵ mol of ClAl(C₆F₅)₂, or 6.78 x 10⁻⁵ mol of Al(C₆F₅)₃, which were essentially equimolar amounts of each catalyst. After polymerizations were complete, the reactions were stopped with 1 mL of a 1 wt% NaOH in ethanol solution. The reactors were removed from the glovebox, hexane was added and the methyl chloride was allowed to evaporate overnight. The rubber was then coagulated from the hexane cement using ethanol, and dried at 60°C under vacuum.

### Example 2 - Production of Butyl Rubber with Boron Catalysts

Processes similar to Example 1 were attempted using B(C₆F₅)₃ as the catalyst in the presence of advantageous water or in the presence of phenol as the proton source. The attempts were not successful and very little polymeric product of any kind was produced. Any product that was formed was not butyl rubber.

### Example 3 - Molecular Weight

Molecular weights were determined using gas phase chromatography (GPC) run at 35°C on an instrument calibrated using polystyrene standards.

Yield, number average molecular weight (Mₙ), weight average molecular weight (M_{w}) and polydispersity index (PDI) are provided in Table 1 for the butyl rubber samples prepared as described above at the various temperatures indicated above. The results are determined from the average of at least two replicates for each catalyst at each temperature.

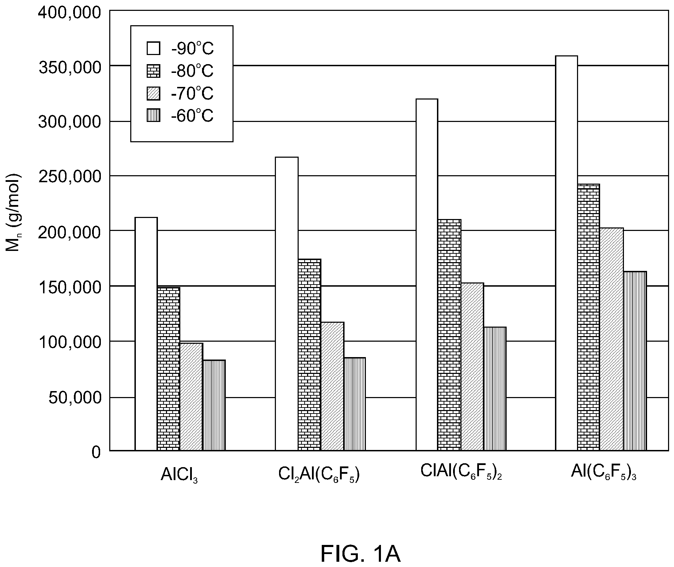

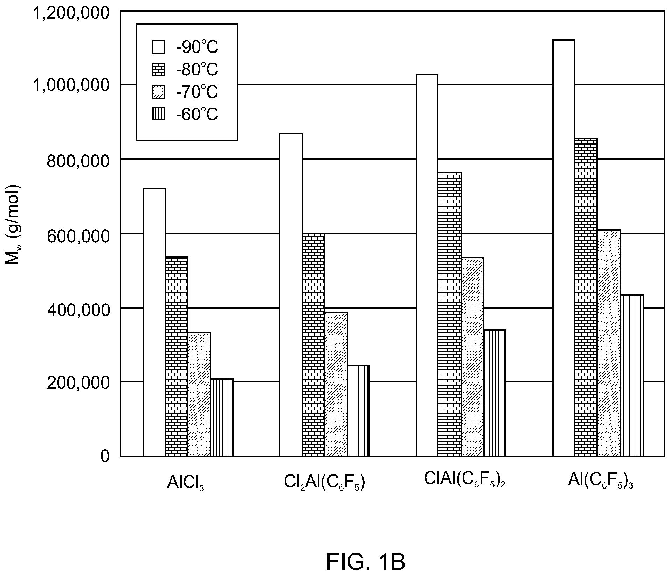

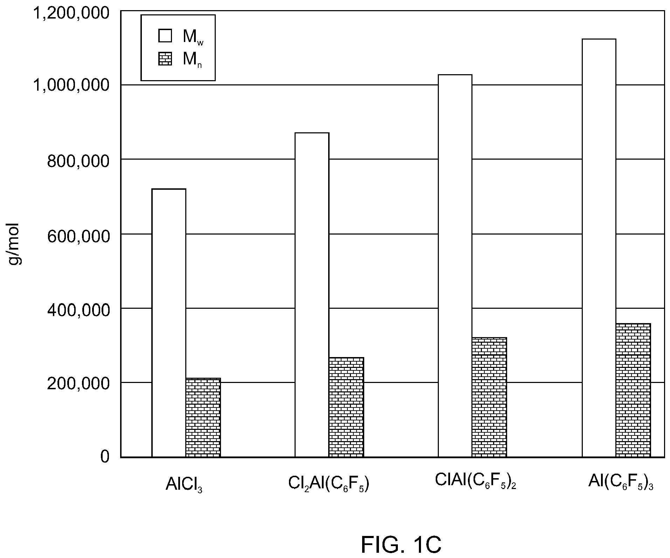

Fig. 1A compares the number average molecular weight (Mₙ) of the butyl rubber polymer prepared using the four catalysts at the four temperatures. Fig. 1B compares the weight average molecular weight (M_{w}) of the butyl rubber polymer prepared using the four catalysts at the four temperatures. Fig. 1C compares the number average molecular weight (Mₙ) to the weight average molecular weight (M_{w}) of the butyl rubber polymer prepared using the four catalysts at -90°C.

It is apparent from Table 1 and Fig. 1A to Fig. 1C that the fluorinated catalysts (Cl₂Al(C₆F₅), ClAl(C₆F₅)₂ or Al(C₆F₅)₃) consistently provide butyl rubber polymer of higher molecular weight at all temperatures than the butyl rubber provided using AlCl₃ as the catalyst, while generally providing comparable yields.

**Table 1**

| T (°C) | Catalyst | Yield (wt%) | Mₙ (g/mol) | M_{w} (g/mol) | PDI |
|---|---|---|---|---|---|
| -90°C | AlCl₃ | 85 | 212,708 | 720,779 | 3.39 |
| | Cl₂Al(C₆F₅) | 81 | 267,361 | 868,996 | 3.25 |
| | ClAl(C₆F₅)₂ | 83 | 320,120 | 1,026,072 | 3.21 |
| | Al(C₆F₅)₃ | 79 | 359,411 | 1,121,256 | 3.12 |
| -80°C | AlCl₃ | 83 | 148,810 | 537,680 | 3.61 |
| | Cl₂Al(C₆F₅) | 78 | 174,617 | 600,399 | 3.44 |
| | ClAl(C₆F₅)₂ | 80 | 211,019 | 763,957 | 3.62 |
| | Al(C₆F₅)₃ | 79 | 242,757 | 854,903 | 3.53 |
| -70°C | AlCl₃ | 82 | 98,423 | 333,262 | 3.39 |
| | Cl₂Al(C₆F₅) | 77 | 117,555 | 387,627 | 3.29 |
| | ClAl(C₆F₅)₂ | 76 | 152,684 | 536,731 | 3.52 |
| | Al(C₆F₅)₃ | 50 | 202,580 | 607,026 | 3.00 |
| -60°C | AlCl₃ | 61 | 82,621 | 208,933 | 2.56 |
| | Cl₂Al(C₆F₅) | 74 | 85,401 | 245,222 | 2.87 |
| | ClAl(C₆F₅)₂ | 67 | 112,996 | 341,512 | 3.03 |
| | Al(C₆F₅)₃ | 53 | 163,375 | 434,463 | 2.67 |

### Example 4 - Cyclic Oligomer Content

For cyclic oligomer content, the produced copolymer was coagulated and cyclic oligomers were quantified from the remaining solvent mixture after coagulation using GC-FID. Total cyclic oligomer content as well as individual content for C13 and C21 cyclic oligomers are provided in Table 1 for the butyl rubber samples prepared as described above at the various temperatures indicated above. The results are determined from the average of at least two replicates for each catalyst at each temperature.

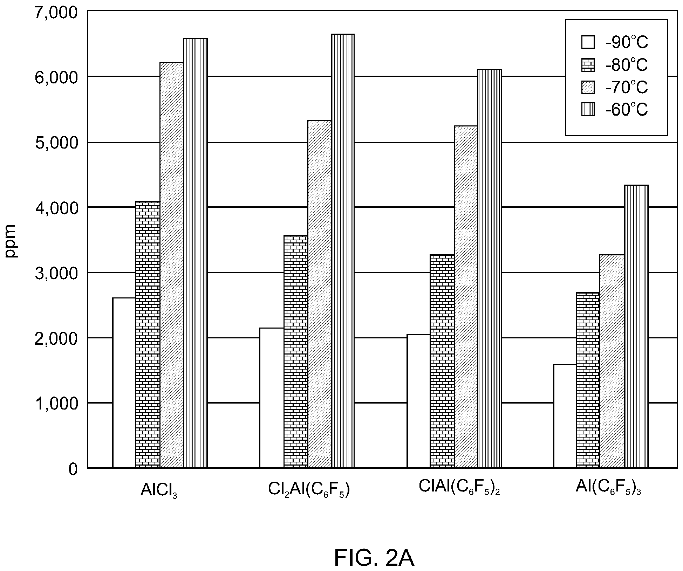

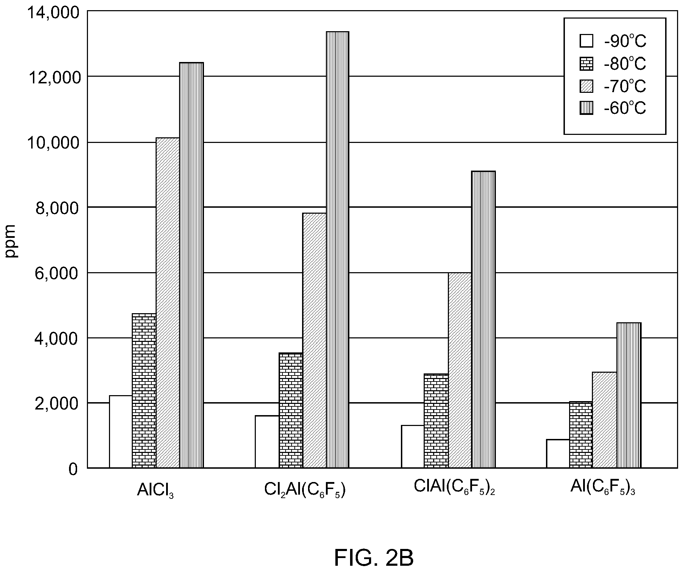

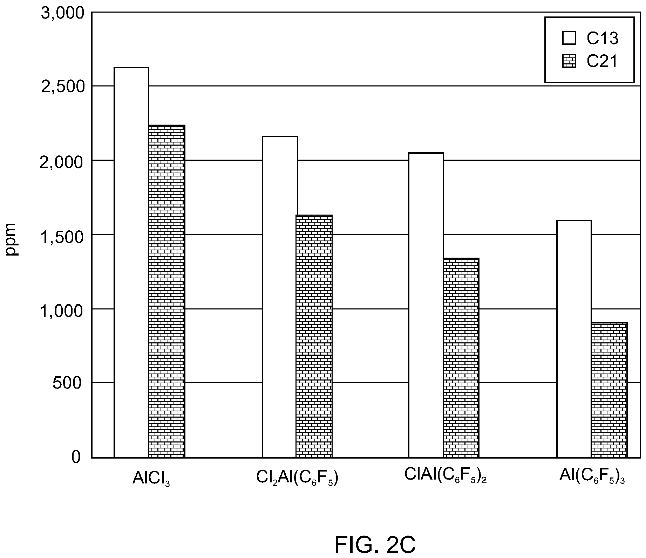

It is apparent from Table 2 and Fig. 2A to Fig. 2C that the fluorinated catalysts (ClAl(C₆F₅)₂, Cl₂Al(CₑF₅) or Al(C₆F₅)₃) consistently provide butyl rubber polymer having lower total cyclic oligomer content at least up to -70°C reaction temperature than the butyl rubber provided using AlCl₃ as the catalyst at -90°C.

**Table 2**

| T(°C) | Catalyst | C13 (ppm) | C21 (ppm) | Total (ppm) |
|---|---|---|---|---|
| -90°C | AlCl₃ | 2,620 | 2,234 | 4,857 |
| | Cl₂Al(C₆F₅) | 2,159 | 1,630 | 3,789 |
| | ClAl(C₆F₅)₂ | 2,054 | 1,340 | 3,395 |
| | Al(C₆F₅)₃ | 1,595 | 904 | 2,499 |
| -80°C | AlCl₃ | 4,092 | 4,757 | 8,846 |
| | Cl₂Al(C₆F₅) | 3,568 | 3,543 | 7,111 |
| | ClAl(C₆F₅)₂ | 3,275 | 2,897 | 6,172 |
| | Al(C₆F₅)₃ | 2,696 | 2,067 | 4,763 |
| -70°C | AlCl₃ | 6,213 | 10,110 | 16,354 |
| | Cl₂Al(C₆F₅) | 5,320 | 7,816 | 13,136 |
| | ClAl(C₆F₅)₂ | 5,235 | 6,019 | 11,254 |
| | Al(C₆F₅)₃ | 3,289 | 2,948 | 6,236 |
| -60°C | AlCl₃ | 6,556 | 12,403 | 18,959 |
| | Cl₂Al(C₆F₅) | 6,638 | 13,337 | 19,974 |
| | ClAl(C₆F₅)₂ | 6,096 | 9,095 | 15,191 |
| | Al(C₆F₅)₃ | 4,335 | 4,450 | 8,785 |

### Example 5 - Branched Microstructure Content

Branched microstructure content and 1,4-isoprene (1,4 IP) content were calculated using ¹H NMR from peak areas. The content of branched unsaturation as well as the 1,4-isoprene (1,4 IP) content and total unsaturation content are provided in Table 1 for the butyl rubber samples prepared as described above at the various temperatures indicated above. The results are determined from the average of at least two replicates for each catalyst at each temperature.

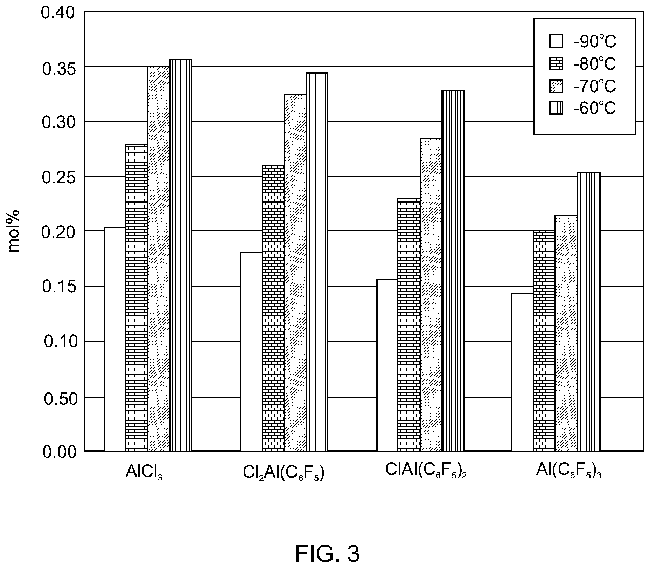

It is apparent from Table 3 and Fig. 3 that the fluorinated catalysts (ClAl(C₆F₅)₂, Cl₂Al(CₑF₅) or Al(C₆F₅)₃) consistently provide butyl rubber polymer having lower branched unsaturation content at all temperatures than the butyl rubber provided using AlCl₃ as the catalyst, while having comparable or higher 1,4-IP content.

**Table 3**

| T(°C) | Catalyst | 1,4-IP (mol%) | Branched Unsat. (mol%) | Total Unsat. (mol%) |
|---|---|---|---|---|
| -90°C | AlCl₃ | 1.58 | 0.20 | 1.78 |
| | Cl₂Al(C₆F₅) | 1.63 | 0.18 | 1.81 |
| | ClAl(C₆F₅)₂ | 1.59 | 0.16 | 1.75 |
| | Al(C₆F₅)₃ | 1.58 | 0.14 | 1.72 |
| -80°C | AlCl₃ | 1.45 | 0.28 | 1.73 |
| | Cl₂Al(C₆F₅) | 1.58 | 0.26 | 1.84 |
| | ClAl(C₆F₅)₂ | 1.56 | 0.23 | 1.79 |
| | Al(C₆F₅)₃ | 1.57 | 0.20 | 1.77 |
| -70°C | AlCl₃ | 1.27 | 0.35 | 1.62 |
| | Cl₂Al(C₆F₅) | 1.33 | 0.33 | 1.66 |
| | ClAl(C₆F₅)₂ | 1.45 | 0.29 | 1.73 |
| | Al(C₆F₅)₃ | 1.38 | 0.22 | 1.60 |
| -60°C | AlCl₃ | 1.11 | 0.36 | 1.47 |
| | Cl₂Al(C₆F₅) | 1.01 | 0.35 | 1.36 |
| | ClAl(C₆F₅)₂ | 1.26 | 0.33 | 1.59 |
| | Al(C₆F₅)₃ | 1.33 | 0.25 | 1.58 |

The novel features will become apparent to those of skill in the art upon examination of the description. It should be understood, however, that the scope of the claims should not be limited by the embodiments, but should be given the broadest interpretation consistent with the wording of the claims and the specification as a whole.

## Claims

1. A process for producing an unsaturated isoolefin copolymer, the process comprising contacting an initiator system comprising a catalyst selected from the group consisting of Cl₂Al(C₆F₅), ClAl(C₆F₅)₂, Al(C₆F₅)₃ and any mixture thereof with a reaction mixture of at least one isoolefin monomer and at least one copolymerizable unsaturated monomer in an organic diluent to produce the unsaturated isoolefin copolymer.

2. The process of claim 1, wherein the initiator system further comprises a proton source.

3. The process of claim 2, wherein the proton source comprises water, alcohols, phenols, thiols, carboxylic acids, and the like or any mixture thereof.

4. The process of claim 2, wherein the proton source comprises water.

5. The process of any one of claims 1 to 4, wherein the initiator system is soluble in the reaction mixture.

6. The process of any one of claims 1 to 5, wherein the catalyst is present in the initiator system at a concentration of 0.0007 wt% to 1 wt%, based on total weight of the initiator system.

7. The process of any one of claims 1 to 6, wherein the initiator system is present in the reaction mixture in an amount of 0.0007 wt% to 0.05 wt%, based on total weight of the reaction mixture.

8. The process of any one of claims 1 to 7, wherein the catalyst and the proton source are present in the initiator system in a ratio of from 5:1 to 150:1 by weight.

9. The process of any one of claims 1 to 8, wherein process is conducted at a temperature in a range of -100°C to -50°C.

10. The process of any one of claims 1 to 8, wherein process is conducted at a temperature in a range of -90°C to -70°C.

11. The process of any one of claims 1 to 10, wherein the organic diluent comprises methyl chloride, dichloromethane, isopentane, cyclopentane, 2,2-dimethylbutane, 2,3-dimethylbutane, 2-methylpentane, 3-methylpentane, n-hexane, methylcyclopentane, 2,2-dimethylpentane or any mixture thereof.

12. The process of any one of claims 1 to 10, wherein the organic diluent comprises methyl chloride.

13. The process of any one of claims 1 to 12, wherein the at least one isoolefin monomer comprises isobutene.

14. The process of any one of claims 1 to 13, wherein the at least one copolymerizable unsaturated monomer comprises isoprene.

15. The process of any one of claims 1 to 14, wherein the process is a slurry process, the process is a continuous process or the process is both a slurry process and a continuous process.
